# EUROPEAN PATENT SPECIFICATION

(11) **EP 3 191 708 B1**
(45) Date of publication and mention of the grant of the patent: **18.11.2020**
(21) Application number: 15753317.5
(22) Date of filing: 18.08.2015
(51) Int. Cl.: B29C 65/72, B29C 65/48, B29C 65/56, B29C 65/78, B29C 65/52, F03D 1/06, B29L 31/08

(54) **IMPROVEMENTS RELATING TO WIND TURBINE BLADE MANUFACTURE**
VERBESSERUNGEN BEI DER HERSTELLUNG VON WINDTURBINENSCHAUFELN
AMÉLIORATIONS ASSOCIÉES À LA FABRICATION DE PALES DE TURBINE ÉOLIENNE

(30) Priority: 20.08.2014 GB 201414774
(43) Date of publication of application: 19.07.2017
(73) Proprietor: Vestas Wind Systems A/S, 8200 Aarhus N (DK)
(72) Inventor: SMITH, Jonathan, Burridge Hampshire SO31 1BL (GB); WARDROPPER, Steve, New Milton Hampshire BH25 7AB (GB)
(74) Representative: Vestas Patents Department
(86) International application number: PCT/DK2015/050243
(87) International publication number: WO 2016/026498

(56) References cited:
- WO-A2-2011/064553
- US-A1- 2009 162 208
- US-A1- 2010 310 379

## Description

### Technical field

The present invention relates generally to the manufacture of wind turbine blades, and more specifically to a method of controlling the bond height between first and second bonded parts of a wind turbine blade, such as the bond height between a shear web and a blade shell.

### Background

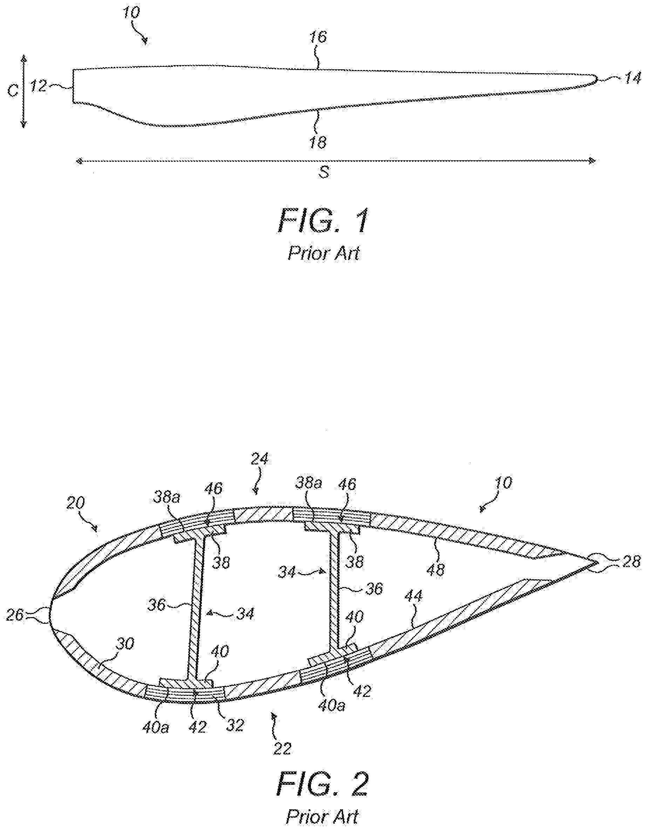

Figure 1 shows a typical wind turbine blade 10 for a utility-scale wind turbine. The blade 10 extends longitudinally from a root end 12 to a tip end 14 in a so-called 'spanwise' direction S, and transversely between a leading edge 16 and a trailing edge 18 in a so-called 'widthwise' or 'chordwise' direction C.

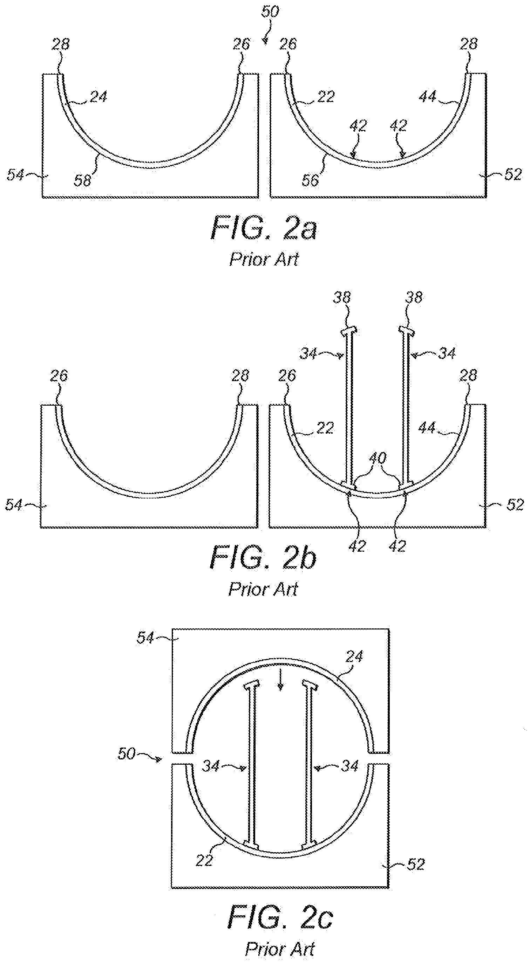

Referring to Figure 2, this shows a cross-sectional view of the wind turbine blade 10. The blade 10 comprises an outer shell 20, which is made up of two half shells, a windward shell 22 and a leeward shell 24, which are bonded together along a leading edge 26 and a trailing edge 28 of the respective shells 22, 24. Each half shell 22, 24 is made up of a plurality of glass-fibre fabric layers and other structural components such as foam core material 30 and carbon fibre reinforcements 32, which are bonded together by cured resin.

A pair of shear webs 34 are bonded between the respective half shells 22, 24. The shear webs 34 are longitudinally-extending structures that bridge the two half shells 22, 24 of the blade 10 and serve to transfer shear loads from the blade 10 to a wind turbine hub in use. The shear webs 34 are I-beams, i.e. each shear web 34 is substantially I-shaped in cross section, and comprises a generally vertical web 36 disposed between upper and lower mounting flanges 38, 40. The upper and lower mounting flanges 38, 40 are arranged transversely to the web 36 and define substantially flat surfaces 38a, 40a for mounting the shear webs 34 to the leeward and windward blade shells 24, 22 respectively.

More specifically, the lower mounting flange 40 of each shear web 34 is bonded to a respective shear web mounting region 42 defined on an inner surface 44 of the windward half shell 22, whilst the upper mounting flange 38 of each shear web 34 is bonded to a respective shear web mounting region 46 defined on an inner surface 48 of the leeward half shell 24.

The relative terms 'upper' and 'lower' are used herein throughout this specification for convenience and refer to the orientation of the various components as shown in the figures. These terms are not intended to limit the scope of the invention.

A method of making the wind turbine blade 10 of Figure 1 will now be described briefly with reference to Figures 2a-2c.

Referring initially to Figure 2a, this shows a mould 50 for the wind turbine blade 10 divided into two female half moulds, a windward mould 52 and a leeward mould 54, which are arranged side by side in an open configuration of the mould 50. The windward blade shell 22 and the leeward blade shell 24 are moulded separately in their respective mould halves 52, 54. As shown in Figure 2a, the windward blade shell 22 is supported on a mould surface 56 of the windward mould 52 and the leeward blade shell 24 is supported on a mould surface 58 of the leeward mould 54.

After forming the blade shells 22, 24 in the respective mould halves 52, 54, adhesive is applied along the leading edge 26 and trailing edge 28 of the windward half shell 22, and/or along the leading edge 26 and trailing edge 28 of the leeward half shell 24. Adhesive is also applied along the shear web mounting regions 42 defined on the inner surface 44 of the windward half shell 22. Further adhesive is applied along the upper mounting flanges 38 of the shear webs 34 (see Figure 2b).

Referring to Figure 2b, once the adhesive has been applied to the various surfaces 26, 28, 38, the shear webs 34 are lifted into the windward half mould 52 and the lower mounting flanges 40 of the shear webs 34 are positioned against the inner surface 44 of the windward half shell 22 in the mounting regions 42.

Referring now to Figure 2c, once the shear webs 34 have been positioned against the windward blade shell 22, the leeward mould 54, including the leeward blade shell 24, is lifted, turned and placed on top of the windward blade mould 52. This process is referred to as 'closing the mould'. Under the weight of the leeward half shell 24, the adhesive between the respective half shells 22, 24 and the adhesive between the shear webs 34 and the half shells 22, 24 is squeezed at these respective interfaces. With the mould 50 remaining closed, the adhesive is left to cure, i.e. harden. Once the adhesive has cured, the mould 50 is then opened and the completed blade 10 is removed. The cured adhesive firmly bonds the half shells 22, 24 together and firmly bonds the shear webs 34 to the half shells 22, 24.

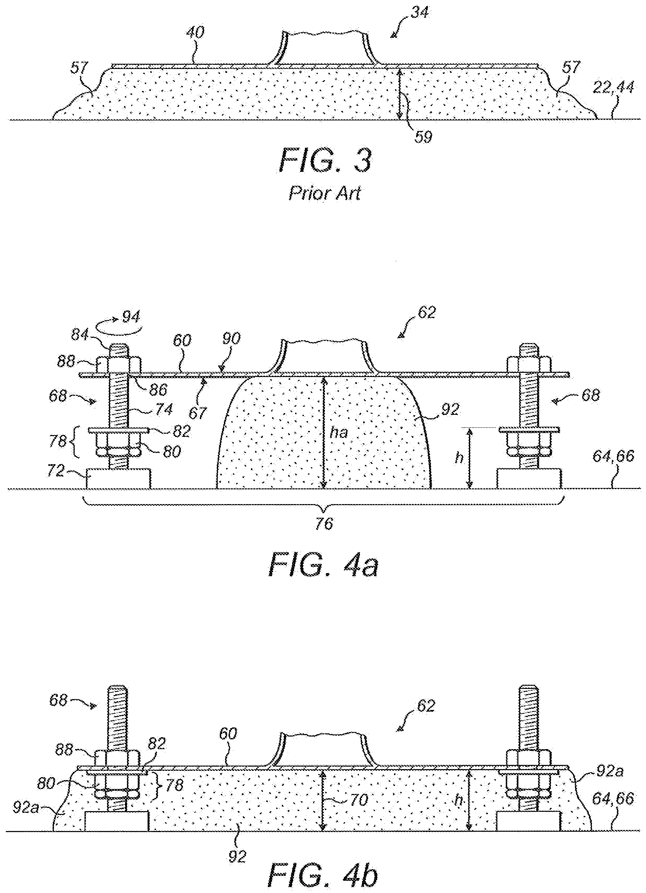

In the process described above, it is difficult to control the bond heights at the respective interfaces. The bond height is the distance between the bonded components once the adhesive has cured, or in other words, it can generally be said that the bond height corresponds substantially to the height or thickness of the cured adhesive at the bond interface. Referring to Figure 3, which is a close-up view of the lower mounting flange 40 of a shear web 34 bonded to the inner surface 44 of the windward blade shell 22, the bond height at this interface is indicated by the arrow 59.

During the blade assembly process described above, the shear web 34 is initially positioned on a bead of uncured adhesive applied to the windward shell 22, and is supported relative to the blade shell 22 by the hydrostatic pressure of the adhesive. Once the mould 50 is closed, the leeward shell 24 bears down on the shear web 34 and squeezes the adhesive. As the adhesive is squeezed, the shear web 34 moves slightly closer to the windward shell 22 until the hydrostatic pressure of the adhesive balances the downward force exerted by the shear web 34. However, the hydrostatic pressure of the adhesive will depend upon a number of factors including the quantity of adhesive initially applied to the windward shell 22 and the viscosity of the adhesive. The viscosity of the adhesive will vary with temperature and will begin to change over a period of time once the adhesive has been deposited as the adhesive begins to cure. The bond height 56 will therefore vary somewhat for each production run, and some re-working of the bondline may be required. This is of course is undesirable.

It can also be difficult to control the position of the shear web 34 precisely relative to the blade shell 22 in a so-called X-Y plane (i.e. generally perpendicular to the bond height direction, where X is in the spanwise direction and Y is in the chordwise direction) and because the shear web 34 has a tendency to move slightly when supported on the uncured adhesive bead, particularly during closing of the mould 50.

The existing process also leads to significant wastage of adhesive when the adhesive is squeezed at the interfaces. Figure 3 shows adhesive 57 that is squeezed out of the bonding interface along the edges of the bond. Typically several hundreds of kilos of adhesive are required to join the blade shells 22, 24 together and to bond the shear webs 34 in place in a 50 meter long blade, as an example. Any adhesive squeezed out of the interfaces is effectively wasted, yet it still contributes significantly to the overall weight of the completed wind turbine blade 10, and represents a substantial material cost.

US2009/0162208 describes a multi-segment wind turbine blade. Brackets are provided to facilitate the alignment of the segments of the wind turbine blade. The segments of the blade are adhesively bonded, controlling the gap between the bonding surfaces of the segments by using shims.

Against this background, it is an object of the present invention to provide an improved method of bonding two parts of a wind turbine blade, such as a shear web and a blade shell, which addresses one or more of the problems outlined above.

### Summary of the invention

According to the present invention, there is provided a method of bonding a first part of a wind turbine blade to a second part of a wind turbine blade, the method comprising the following steps in any suitable order:
(a) providing a first part of a wind turbine blade having a first mounting surface;
(b) providing a second part of the wind turbine blade having a second mounting surface and one or more apertures defined in the second mounting surface;
(c) providing one or more locating devices on the first mounting surface, the or each locating device comprising a shaft extending from the first mounting surface;
(d) arranging the first and second parts such that the first and second mounting surfaces are in mutually opposed relation;
(e) inserting an end of the shaft of the or each locating device through a respective aperture in the second mounting surface;
(f) providing adhesive between the first and second mounting surfaces;
(g) applying a clamping force between the first and second parts via the or each locating device, the clamping force serving to move the first and second mounting surfaces closer together and thereby squeezing the adhesive between the respective mounting surfaces; and
(h) providing one or more stop elements between the first and second mounting surfaces, the or each stop element being arranged to maintain a predefined minimum separation between the first and second mounting surfaces and thereby to set a bond height between the first and second parts.

The stop elements prevent the respective mounting surfaces from being moved too close together when the clamping force is applied, and thereby serves to set the bond height between the first and second parts. The shafts locating with the apertures advantageously serve to locate the second part in the correct position relative to the first part. This engagement also prevents relative movement between the two parts during the bonding process.

In preferred embodiments of the invention, one of the first or second parts is a wind turbine blade shell and the other of the first or second parts is a shear web. In particularly preferred embodiments, the first part is a wind turbine blade shell and the second part is a shear web. The shear web preferably comprises a mounting flange and the second mounting surface is preferably a surface of the mounting flange. Alternatively, both the first part and the second part could be parts of a wind turbine blade shell. For example the two parts could be the windward and leeward half shells of a wind turbine blade.

In the case of bonding a shear web to a wind turbine blade shell, using the locating device to provide a clamping force between the two parts is particularly advantageous because it does not require the weight of one half shell bearing down on the other to compress the adhesive. Accordingly, the bond between the shear web and the blade shell can be created with the mould open, e.g. before the respective half shells of the blade are joined together. This allows the bond to be inspected as the shear web is forced towards the blade shell and the adhesive is compressed.

The clamping force provided by the locating device also advantageously prevents the bond from relaxing back, which is a particular problem with the prior art that may result in voids being created in the bond line.

Preferably the method comprises applying the adhesive to the first mounting surface before arranging the first and second parts together. For example, a bead of adhesive may be applied along a shear web mounting region defined on a surface of the blade shell before the shear web is positioned relative to the blade shell. Alternatively, the two parts may be arranged together, and adhesive may be applied between the two parts, for example by means of injection or infusion.

The shaft of the or each locating device is preferably threaded. In one embodiment, the shaft is part of a jacking screw. The method may further include providing a nut on the end of the shaft after the shaft has been inserted through the aperture in the second part. Preferably the clamping force is applied to the second part by turning the nut.

The or each stop element preferably comprises a height-adjustable shim. The method preferably comprises adjusting the height of the shim to set the shim to set the bond height. In one embodiment the shim comprise a nut such as a locking nut, and may also comprise a washer. In other embodiments, the stop elements may comprise one or more spacer elements provided between the first and second mounting surfaces. The spacer elements may be attached to the first mounting surface or to the second mounting surface prior to arranging the first and second parts together. For example, the spacer elements may be bonded to the mounting surface of the shear web or to the mounting surface of the wind turbine blade. In a further embodiment, the stop element may be defined by the screw thread of the threaded shaft of the locating device. For example, the screw thread may extend only along a portion of the shaft, which would prevent the nut on the end of the shaft from being turned beyond a certain point, and thereby preventing the first and second parts from being moved together beyond a predetermined limit.

Preferably the method involves attaching the or each locating device to the first mounting surface. In preferred embodiments the or each locating device is bonded to the first mounting surface. There is therefore advantageously no need to create apertures in the first mounting surface or otherwise to deform the first mounting surface. This is particularly advantageous where the first part is a wind turbine blade shell.

The inventive concept encompasses a method of making a wind turbine blade comprising bonding a first part of the blade to a second part of the blade according to the above method. The inventive concept also encompasses a wind turbine blade made according to such a method, and a wind turbine comprising such a wind turbine blade.

The invention also provides a wind turbine blade comprising: a first part having a first mounting surface, and a second part having a second mounting surface, the first and second parts being adhesively bonded together between the respective mounting surfaces;
one or more apertures defined in the second mounting surface; and one or more locating devices provided between the first and second mounting surfaces and configured to apply a clamping force between the first and second parts, each locating device comprising a shaft having an end extending through a respective aperture in the second mounting surface; and one or more stop elements located between the first and second mounting surfaces, the stop element(s) being arranged to prevent the first and second mounting surfaces moving substantially closer together than a predefined minimum separation when the clamping force is applied, the stop element(s) thereby setting a bond height between the first and second parts.

The or each locating device is preferably made substantially from non-metallic materials. In a preferred embodiment the locating device is made from suitable plastics material such as nylon. The non-metallic materials are advantageously lightweight and hence do not contribute appreciably to the overall weight of the blade, and further beneficially are not susceptible to lightning strikes and hence do not interfere with lightning protection systems employed in wind turbine blades.

The shaft of the or each locating device is preferably threaded. In one preferred embodiment the shaft is part of a jacking screw. The locating device may further comprise a nut provided on the end of the shaft. The locating device is preferably configured to apply the clamping force between the first and second parts when the nut is tightened. In this configuration, the second part is located between the stop element and the nut.

The or each stop element preferably comprises a height-adjustable shim located between the first and second mounting surfaces. The height-adjustable shim preferably comprises a nut provided on the threaded shaft. In other embodiments, the stop elements may comprise spacer elements located between the respective mounting surfaces, for example spacer elements bonded to the first and/or the second mounting surfaces. In yet another embodiment, the stop element may be defined by the screw thread of the shaft. Specifically, the screw thread may only be provided on a portion of the shaft such that the absence of thread prevents the nut on the end of the shaft being turned beyond a certain point.

One of the first or second parts is preferably a wind turbine blade shell and the other of the first or second parts is preferably a shear web. In preferred embodiments, the first part is a wind turbine blade shell and the second part is a shear web. The shear web preferably comprises a mounting flange defining the second mounting surface. Accordingly, the or each aperture is preferably provided in the mounting flange. The mounting flange preferably includes a plurality of apertures spaced apart along the length of the mounting flange. A plurality of locating devices are preferably mounted to the blade surface, with each engaging with a respective aperture in the mounting flange of the shear web.

The inventive concept includes a wind turbine comprising the wind turbine blade described above.

Optional features described above in relation to the invention when expressed in terms of a method apply equally to the method when expressed in terms of an apparatus and vice versa. Repetition of such features has been avoided where possible purely for reasons of conciseness.

### Brief description of the drawings

Figures 1 to 3 have already been described above by way of background to the present invention. In order that the present invention may be more readily understood, embodiments of the invention will now be described, by way of non-limiting example only, with reference to Figures 4-6, in which:
Figure 4a is a schematic cross-sectional view of a bond interface between a shear web and a blade shell including locating devices according to a first example of the present invention, and prior to squeezing of the adhesive;
Figure 4b shows the bond interface after squeezing the adhesive;
Figure 5 shows a locating device at a bond interface between a shear web and a blade shell according to a second example of the present invention; and
Figure 6 shows a locating device at a bond interface between a shear web and a blade shell according to a third example of the present invention.

### Detailed description

Referring to Figure 4a, this is a close up view similar to Figure 3, and shows a lower mounting flange 60 of a shear web 62 positioned in opposed relation to an inner surface 64 of a windward blade shell 66. Specifically, a mounting surface 67 of the mounting flange 60 is arranged opposite the inner surface 64 of the blade shell 66. A pair of locating devices 68 are provided between the mounting flange 60 and the blade shell 64. The locating devices 68 serves to locate the shear web 62 correctly in relation to the blade shell 66 in an X-Y plane (i.e. perpendicular to the bond height 70, see Figure 4b), and further serve to set the bond height 70 between the two components 62, 66, as will now be described in further detail.

Each locating device 68 comprises a base 72 and a threaded shaft 74. In this example, the shaft 74 is part of a jackscrew. The base 72 is bonded to the inner surface 64 of the blade shell 66 within a shear web mounting region 76 defined on the inner surface 64 of the blade shell 66. The shaft 74 extends upwardly from the base 72, in a direction substantially perpendicular to the inner surface 64 of the blade shell 66.

A stop element 78 in the form of a height-adjustable shim is provided on the threaded shaft 74 near the base 72. In this example, the height-adjustable shim is in the form of a lock nut 80 and a washer 82. The lock nut 80 can be turned on the shaft 74 to vary its position along the shaft 74 relative to the base 72, i.e. to vary its height (h) above the surface 64 of the blade shell 66. The washer 82 is located above lock nut 80 in the orientation of the components shown in Figure 4a, i.e. the lock nut 80 is located between the washer 82 and the base 72.

A distal end or 'free end' 84 of the shaft 74 extends through an aperture 86 defined in the mounting flange 60 of the shear web 62. A further nut 88, referred to herein as a 'clamping nut' is provided on the end of the shaft 84. The clamping nut 88 is located on an upper side 90 of the mounting flange 60 in the orientation of the components shown in Figure 4a, or in other words the clamping nut 88 is located on an opposite side of the flange 60 to the stop element 78.

Figure 4a only shows a cross-section through the mounting flange 60, blade shell 66 and locating devices 68. In practice, a plurality of locating devices 68 are provided at spaced-apart intervals along the length of the shear web mounting region 76 (i.e. in a longitudinal direction perpendicular to the plane of the page in Figure 4a), and a corresponding plurality of apertures 86 are provided in the mounting flange 60 at spaced-apart intervals along the length of the shear web 62. The apertures 86 are preferably created in the mounting flange 60 at predefined locations during manufacture of the shear web 62.

Laser projection is used to determine the appropriate locations on the shear web mounting region 76 at which the locating devices 68 are to be mounted. The positions of the locating devices 68 correspond with the positions of the apertures 86 defined in the mounting flange 60 of the shear web 62. Accordingly, when the shear web 62 is positioned relative to the blade shell 66, the shafts 74 of the respective locating devices 68 are inserted through the respective apertures 86, such that the locating devices 68 serve to correctly align the shear web 62 relative to the blade shell 66.

Prior to locating the shear web 61 relative to the blade shell 66, the locking nuts 80 are set at a predetermined height (h) above the surface 64 of the blade shell 66 in order to set the eventual bond height 70 (Figure 4b) between the shear web 62 and the blade shell 66. Next, a bead of adhesive 92 is applied along the mounting region 76 of the blade shell 66. The bead of adhesive 92 is applied generally centrally between opposed locating devices 68, as shown in Figure 4a. Advantageously, therefore, the locating devices 68 provide a convenient indication of where the bead of adhesive 92 should be applied to the blade surface 64. Notably, the bead of adhesive 92 has an initial height (hₐ) above the surface 64 of the blade shell 66 that is greater than the height h of the stop elements 78 above the surface 64.

Once the height h of the lock nuts 80 have been set, and the bead of adhesive 92 applied, the shear web 62 is then lifted and supported over the blade shell 66 and then lowered towards the blade shell 66. The apertures 86 in the mounting flange 60 are aligned with the respective shafts 74 of the locating elements 68, which are then inserted through the apertures 86. At this stage the weight of the shear web 62 is supported primarily by the hydrostatic pressure of the bead of adhesive 92, but the shear web 62 may additionally still be supported by a crane or gantry at this stage if required.

Once the shafts 74 of the various locating devices 68 have been inserted through the respective apertures 86 in the mounting flange 60, a plurality of clamping nuts 88 are arranged respectively on the ends 84 of the shafts 74, on the opposite side of the mounting flange 60 to the stop elements 78, as already described above. The clamping nuts 88 are then turned in a clockwise direction on the respective shafts 74, as indicated by the arrow 94 in Figure 4a, which causes the clamping nuts 88 to move down the shafts 74 towards the bases 72. As the clamping nuts 88 are turned, they exert a downward force, i.e. a clamping force on the flange 60 of the shear web 62. This clamping force forces the shear web 62 downwards towards the surface 64 of the blade shell 66.

Referring now to Figure 4b, the clamping nuts 88 are turned clockwise until the mounting flange 60 of the shear web 62 makes contact with the stop elements 78. At this point the shear web 62 cannot be forced any closer to the surface 64 of the blade shell 66, and hence the stop elements 78 limit the extent to which the shear web 62 can be forced towards the blade shell 66.

As the clamping nuts 88 are tightened to force the shear web 62 towards the blade shell 66, the bead of adhesive 92 between the two components 62, 66 is compressed, and expands laterally to fill the space between the mounting flange 60 and the blade shell 66. As the bond height 70 is predetermined by the height h of the stop elements 78, the quantity of adhesive 92 required to fill the space is known in advance. This allows precise control over the quantity of adhesive 92 required, and ensures that any squeeze out 92a of adhesive 92 is minimised.

Once the shear web 62 has been clamped between the lock nuts 80 and the clamping nuts 88, the adhesive 92 is then cured, causing it to harden and firmly bond the respective components 62, 66 together. The final bond height 70 between the shear web 62 and the blade shell 66, as indicated by the arrow 70 in Figure 4b, then corresponds to the height h of the washer 82 of the stop element 78 above the surface 64 of the blade shell 66.

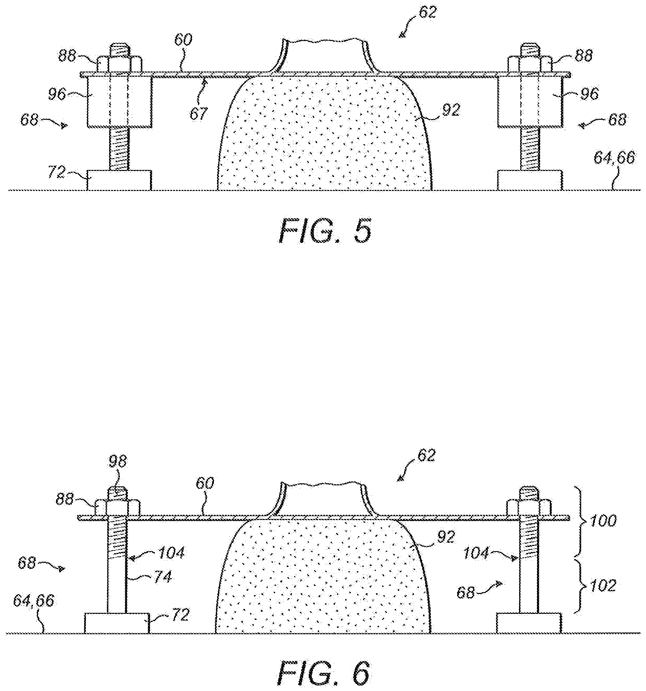

Referring now to Figure 5, this shows a second embodiment of the present invention. In comparison to the previous example, the height-adjustable shims have been omitted and instead the stop elements are defined by spacer elements 96 bonded to the mounting surface 67 of the mounting flange 60 of the shear web 62. In this example, the nuts 88 are tightened until the spacer elements 96 make contact with the bases 72 of the locating devices 68. When this occurs the spacer elements 96 prevent the shear web 62 from being moved any closer to the blade shell 66 and hence determine the bond height between the two parts 62, 66.

Referring now to Figure 6, this shows a third embodiment of the present invention. In this example, the stop elements are defined by the screw thread 98 of the threaded shafts 74 of the locating devices 68. The screw thread 98 extends over a portion of the shaft 74 and stops short of the base 72. The shaft 74 therefore has a threaded portion 100 and a non-threaded portion 102. In this example, the nuts 88 are tightened until they reach the interfaces 104 between the threaded and non-threaded portions 100, 102 of the shafts 74, at which point it is impossible to tighten the nuts 88 any further, and hence impossible to force the shear web 62 any closer to the blade shell 66. Accordingly, the height of the interface 104 above the surface 64 of the blade shell 66 defines the bond height.

Once the shear web 62 has been bonded to the blade shell 66, the locating devices 68 are then substantially embedded within the cured adhesive 92 in the resulting bondline. The clamping nuts 88 may remain in place or they may be removed after the adhesive 92 has cured. An advantage of the clamping nuts 88 remaining in place is that they then provide an additional means of coupling between the shear web 62 and the blade shell 66 throughout the lifetime of the blade, and hence help prevent the shear web 62 from becoming detached from the blade. A further advantage of the clamping nuts 88 remaining in place is that it reduces the blade production time by dispensing with an extra step of removing the nuts 88.

In the above example, the locating devices 68 are made of non-metallic material. Specifically, in this example, all components of the locating device 68 are made from nylon. This is advantageous as the locating devices 68 are relatively lightweight and therefore do not substantially increase the overall weight of the blade. A further advantage is that the non-metallic components are not susceptible to lightning strikes and do not interfere with lightning conductor systems provided inside the blade. The clamping nuts 88 may be made of metal, if required, but in this case it is then desirable to remove the nuts 88 after the adhesive has cured.

The inventive bonding process described above advantageously does not rely on the weight of the leeward shell 24 (see Figure 2c) bearing against the shear webs 62 to squeeze the adhesive 92. The bonding process can advantageously take place before mould closure, i.e. before the leeward and windward blade shells are bonded together. The positive engagement between the blade shell 66 and the shear web 62 via the locating devices 68 prevents the shear web 62 from moving once in position.

It will be appreciated that many modifications may be made to the above examples without departing from the scope of the present invention as defined in the accompanying claims. For example, whilst the above examples relate to the bond between a shear web and the windward blade shell, in other examples the bond may be between other components, such as between the shear web and the leeward blade shell and/or between the blade shells themselves; in this case the locating devices 68 could be provided at the leading and/or trailing edges of the blade shells. The invention is also suitable for bonding shear webs inside single-piece wind turbine blade shells.

## Claims

1. A method of bonding a first part (66) of a wind turbine blade to a second part (62) of a wind turbine blade, the method comprising the following steps in any suitable order:
(a) providing a first part (66) of a wind turbine blade having a first mounting surface (64);
(b) providing a second part (62) of the wind turbine blade having a second mounting surface (67) and one or more apertures (86) defined in the second mounting surface;
(c) providing one or more locating devices (68) on the first mounting surface (64), the or each locating device comprising a shaft (74) extending from the first mounting surface (64);
(d) arranging the first (66) and second parts (62) such that the first and second mounting surfaces (64, 67) are in mutually opposed relation;
(e) inserting an end of the shaft (74) of the or each locating device through a respective aperture in the second mounting surface (67);
(f) providing adhesive (92) between the first and second mounting surfaces (64, 67);
(g) applying a clamping force between the first and second parts (66, 62) via the or each locating device (68), the clamping force serving to move the first and second mounting surfaces closer together and thereby squeezing the adhesive (92) between the respective mounting surfaces (64, 67); and
(h) providing one or more stop elements (78) between the first and second mounting surfaces (64, 67), the or each stop element being arranged to maintain a predefined minimum separation between the first and second mounting surfaces and thereby to set a bond height between the first and second parts.

2. The method of Claim 1, wherein the or each stop element (78) comprises a height-adjustable shim and the method comprises adjusting the height of the shim to set the bond height.

3. The method of any preceding claim, wherein step (f) comprises applying the adhesive (92) to the first mounting surface (64) and/or the second mounting surface (67) before arranging the first and second parts together in step (d).

4. The method of any preceding claim, wherein the shaft (74) of the or each locating device is threaded and the method further comprises:
providing a nut (88) on the end of the shaft after step (e); and
turning the nut to apply the clamping force.

5. The method of Claim 1, wherein the first part (66) is a wind turbine blade shell and the second part (62) is a shear web.

6. The method of Claim 5, wherein the shear web (62) comprises a mounting flange (60) and the second mounting surface is a surface of the mounting flange.

7. A wind turbine blade comprising:
a first part (66) having a first mounting surface (66), and a second part (62) having a second mounting surface (67), the first and second parts being adhesively bonded together between the respective mounting surfaces;
one or more apertures (86) defined in the second mounting surface (67); and
one or more locating devices (68) provided between the first and second mounting surfaces (64, 67)and configured to apply a clamping force between the first and second parts, each locating device comprising a shaft (74) having an end extending through a respective aperture (86) in the second mounting surface; and
one or more stop elements (78) located between the first and second mounting surfaces (64, 67), the stop element(s) being arranged to prevent the first and second mounting surfaces moving substantially closer together than a predefined minimum separation when the clamping force is applied, the stop element(s) thereby setting a bond height between the first and second parts (66, 62).

8. The wind turbine blade of Claim 7, wherein the or each locating device (68) comprises, respectively, the or each stop element (78).

9. The wind turbine blade of Claim 7 or Claim 8, wherein the or each stop (78) element comprises a height-adjustable shim located between the first and second mounting surfaces (64, 67).

10. The wind turbine blade of Claim 9 wherein the shaft (74) of the or each locating device is threaded and the height-adjustable shim comprises a nut provided on the threaded shaft.

11. The wind turbine blade of any of Claims 7 to 10, wherein the locating device (68) is made substantially from non-metallic materials, and preferably is made primarily from plastics material such as nylon.

12. The wind turbine blade of any of Claims 7 to 11 wherein the shaft (74) of the or each locating device (68) is threaded, and the locating device further comprises a nut (88) provided on the end of the shaft, and wherein the locating device is configured to apply the clamping force between the first and second parts when the nut is tightened.

13. The wind turbine blade of Claim 7, wherein the first part (66) is a wind turbine blade shell and the second part (62) is a shear web.

14. The wind turbine blade of Claim 13, wherein the shear web (62) comprises a mounting flange (60) defining the second mounting surface.

15. A wind turbine comprising the wind turbine blade of any of Claims 7 to 14.

## Patentansprüche

1. Verfahren zum Verkleben eines ersten Teils (66) eines Windkraftanlagenblattes mit einem zweiten Teil (62) eines Windkraftanlagenblattes, wobei das Verfahren die folgenden Schritte in beliebiger geeigneter Reihenfolge umfasst:
(a) Bereitstellen eines ersten Teils (66) eines Windkraftanlagenblattes, das eine erste Montagefläche (64) aufweist;
(b) Bereitstellen eines zweiten Teils (62) des Windkraftanlagenblattes, das eine zweite Montagefläche (67) und eine oder mehreren Öffnungen (86) aufweist, die in der zweiten Montagefläche definiert sind;
(c) Bereitstellen einer oder mehrerer Positioniervorrichtungen (68) auf der ersten Montagefläche (64), wobei die oder jede Positioniervorrichtung eine Welle (74) umfasst, der sich von der ersten Montagefläche (64) aus erstreckt;
(d) Anordnen des ersten (66) und des zweiten Teils (62), so dass die erste und die zweite Montagefläche (64, 67) in gegenseitiger Beziehung zueinander stehen;
(e) Einsetzen eines Endes der Welle (74) der oder jeder Positioniervorrichtung durch eine jeweilige Öffnung in der zweiten Montagefläche (67);
(f) Bereitstellen von Klebstoff (92) zwischen der ersten und zweiten Montagefläche (64, 67);
(g) Aufbringen einer Klemmkraft zwischen dem ersten und dem zweiten Teil (66, 62) über die oder jede Positioniervorrichtung (68), wobei die Klemmkraft dazu dient, die erste und die zweite Montagefläche näher zusammenzurücken und dadurch den Klebstoff (92) zwischen den jeweiligen Montageflächen (64, 67) zu drücken; und
(h) Bereitstellen eines oder mehrerer Anschlagelemente (78) zwischen der ersten und der zweiten Montagefläche (64, 67), wobei das oder jedes Anschlagelement so angeordnet ist, dass es einen vordefinierten Mindestabstand zwischen der ersten und der zweiten Montagefläche aufrechterhält und dadurch eine Verklebungshöhe zwischen dem ersten und dem zweiten Teil einstellt.

2. Verfahren nach Anspruch 1, wobei das oder jedes Anschlagelement (78) eine höhenjustierbare Distanzscheibe umfasst und das Verfahren das Justieren der Höhe der Distanzscheibe zum Einstellen der Verklebungshöhe umfasst.

3. Verfahren nach einem der vorstehenden Ansprüche, wobei Schritt (f) das Aufbringen des Klebstoffs (92) auf die erste Montagefläche (64) und/oder die zweite Montagefläche (67) vor dem gemeinsamen Anordnen des ersten und zweiten Teils in Schritt (d) umfasst.

4. Verfahren nach einem der vorstehenden Ansprüche, wobei die Welle (74) der oder jeder Positionierungsvorrichtung mit einem Gewinde versehen ist und das Verfahren weiter umfasst:
Bereitstellen einer Mutter (88) am Ende der Welle nach Schritt (e); und
Drehen der Mutter zum Aufbringen der Klemmkraft.

5. Verfahren nach Anspruch 1, wobei das erste Teil (66) eine Windkraftanlagenblattschale ist und das zweite Teil (62) ein Steg ist.

6. Verfahren nach Anspruch 5, wobei der Steg (62) einen Montageflansch (60) umfasst und die zweite Montagefläche eine Fläche des Montageflansches ist.

7. Windkraftanlagenblatt, umfassend:
ein erstes Teil (66), das eine erste Montagefläche (66) aufweist, und ein zweites Teil (62), das eine zweite Montagefläche (67) aufweist, wobei das erste und das zweite Teil zwischen den jeweiligen Montageflächen miteinander verklebt sind;
eine oder mehrere Öffnungen (86), die in der zweiten Montagefläche (67) definiert sind; und
eine oder mehrere Positioniervorrichtungen (68), die zwischen der ersten und der zweiten Montagefläche (64, 67) bereitgestellt und so konfiguriert sind, dass sie eine Klemmkraft zwischen dem ersten und dem zweiten Teil aufbringen, wobei jede Positioniervorrichtung eine Welle (74) umfasst, die ein Ende aufweist, das sich durch eine jeweilige Öffnung (86) in der zweiten Montagefläche erstreckt; und
eines oder mehrere Anschlagelemente (78), die zwischen der ersten und der zweiten Montagefläche (64, 67) befindlich sind, wobei das (die) Anschlagelement(e) so angeordnet ist (sind), dass es (sie) verhindert (verhindern), dass die erste und die zweite Montagefläche wesentlich näher zusammenrücken als um einen vordefinierten Mindestabstand, wenn die Klemmkraft aufgebracht wird, wodurch das (die) Anschlagelement(e) eine Verklebungshöhe zwischen dem ersten und dem zweiten Teil (66, 62) einstellt (einstellen).

8. Windkraftanlagenblatt nach Anspruch 7, wobei die oder jede Positionierungsvorrichtung (68) jeweils das oder jedes Anschlagelement (78) umfasst.

9. Windkraftanlagenblatt nach Anspruch 7 oder 8, wobei das oder jedes Anschlagelement (78) eine höhenjustierbare Distanzscheibe umfasst, die zwischen der ersten und zweiten Montagefläche (64, 67) befindlich ist.

10. Windkraftanlagenblatt nach Anspruch 9, wobei die Welle (74) der oder jeder Positioniervorrichtung mit einem Gewinde versehen ist und die höhenjustierbare Distanzscheibe eine auf der Gewindewelle bereitgestellte Mutter umfasst.

11. Windkraftanlagenblatt nach einem der Ansprüche 7 bis 10, wobei die Positionierungsvorrichtung (68) im Wesentlichen aus nichtmetallischen Materialien hergestellt ist und bevorzugt hauptsächlich aus Kunststoffmaterial wie Nylon hergestellt ist.

12. Windkraftanlagenblatt nach einem der Ansprüche 7 bis 11, wobei die Welle (74) der oder jeder Positionierungsvorrichtung (68) mit einem Gewinde versehen ist und die Positionierungsvorrichtung weiter eine Mutter (88) umfasst, die am Ende der Welle bereitgestellt ist, und wobei die Positionierungsvorrichtung so konfiguriert ist, dass sie die Klemmkraft zwischen dem ersten und dem zweiten Teil aufbringt, wenn die Mutter angezogen wird.

13. Windkraftanlagenblatt nach Anspruch 7, wobei das erste Teil (66) eine Windkraftanlagenblattschale ist und das zweite Teil (62) ein Steg ist.

14. Windkraftanlagenblatt nach Anspruch 13, wobei Steg (62) einen Montageflansch (60) umfasst, der eine zweite Montagefläche definiert.

15. Windkraftanlage, umfassend das Windkraftanlagenblatt nach einem der Ansprüche 7 bis 14.

## Revendications

1. Procédé de liaison d'une première partie (66) d'une pale d'éolienne à une seconde partie (62) d'une pale d'éolienne, le procédé comprenant les étapes suivantes dans un ordre approprié quelconque :
(a) fournir une première partie (66) d'une pale d'éolienne ayant une première surface de montage (64) ;
(b) fournir une seconde partie (62) de la pale d'éolienne ayant une seconde surface de montage (67) et une ou plusieurs ouvertures (86) définies dans la seconde surface de montage ;
(c) fournir un ou plusieurs dispositifs de positionnement (68) sur la première surface de montage (64), le ou chaque dispositif de positionnement comprenant un arbre (74) s'étendant depuis la première surface de montage (64) ;
(d) agencer les première (66) et seconde parties (62) de telle sorte que les première et seconde surfaces de montage (64, 67) sont en relation mutuellement opposée ;
(e) insérer une extrémité de l'arbre (74) du ou de chaque dispositif de positionnement à travers une ouverture respective dans la seconde surface de montage (67) ;
(f) fournir un adhésif (92) entre les première et seconde surfaces de montage (64, 67) ;
(g) appliquer une force de serrage entre les première et seconde parties (66, 62) par l'intermédiaire du ou de chaque dispositif de positionnement (68), la force de serrage servant à rapprocher les première et seconde surfaces de montage et à presser ainsi l'adhésif (92) entre les surfaces de montage respectives (64, 67) ; et
(h) fournir un ou plusieurs éléments d'arrêt (78) entre les première et seconde surfaces de montage (64, 67), le ou chaque élément d'arrêt étant agencé pour maintenir une séparation minimale prédéfinie entre les première et seconde surfaces de montage et ainsi pour définir une hauteur de liaison entre les première et seconde parties.

2. Procédé selon la revendication 1, dans lequel le ou chaque élément d'arrêt (78) comprend une cale réglable en hauteur et le procédé comprend le réglage de la hauteur de la cale pour définir la hauteur de liaison.

3. Procédé selon l'une quelconque des revendications précédentes, dans lequel l'étape (f) comprend l'application de l'adhésif (92) sur la première surface de montage (64) et/ou à la seconde surface de montage (67) avant l'agencement conjoint des première et seconde parties à l'étape (d).

4. Procédé selon l'une quelconque des revendications précédentes, dans lequel l'arbre (74) du ou de chaque dispositif de positionnement est fileté et le procédé comprend en outre :
la fourniture d'un écrou (88) sur l'extrémité de l'arbre après l'étape (e) ; et
la rotation de l'écrou pour appliquer la force de serrage.

5. Procédé selon la revendication 1, dans lequel la première partie (66) est une coque de pale d'éolienne et la seconde partie (62) est une toile de cisaillement.

6. Procédé selon la revendication 5, dans lequel la toile de cisaillement (62) comprend une bride de montage (60) et la seconde surface de montage est une surface de la bride de montage.

7. Pale d'éolienne comprenant :
une première partie (66) ayant une première surface de montage (66), et une seconde partie (62) ayant une seconde surface de montage (67), les première et seconde parties étant liées de manière adhésive entre les surfaces de montage respectives ;
une ou plusieurs ouvertures (86) définies dans la seconde surface de montage (67) ; et
un ou plusieurs dispositifs de positionnement (68) prévus entre les première et seconde surfaces de montage (64, 67) et configurés pour appliquer une force de serrage entre les première et seconde parties, chaque dispositif de positionnement comprenant un arbre (74) ayant une extrémité s'étendant à travers une ouverture (86) respective dans la seconde surface de montage ; et
un ou plusieurs éléments d'arrêt (78) situés entre les première et seconde surfaces de montage (64, 67), le ou les éléments d'arrêt étant agencés pour empêcher les première et seconde surfaces de montage de se rapprocher sensiblement plus qu'une séparation minimale prédéfinie lorsque la force de serrage est appliquée, le ou les éléments d'arrêt définissant ainsi une hauteur de liaison entre les première et seconde parties (66, 62).

8. Pale d'éolienne selon la revendication 7, dans laquelle le ou chaque dispositif de positionnement (68) comprend, respectivement, le ou chaque élément d'arrêt (78).

9. Pale d'éolienne selon la revendication 7 ou la revendication 8, dans laquelle le ou chaque élément d'arrêt (78) comprend une cale réglable en hauteur située entre les première et seconde surfaces de montage (64, 67).

10. Pale d'éolienne selon la revendication 9 dans laquelle l'arbre (74) du ou de chaque dispositif de positionnement est fileté et la cale réglable en hauteur comprend un écrou prévu sur l'arbre fileté.

11. Pale d'éolienne selon l'une quelconque des revendications 7 à 10, dans laquelle le dispositif de positionnement (68) est sensiblement constitué de matériaux non métalliques, et est de préférence principalement constitué de matériau plastique tel que le nylon.

12. Pale d'éolienne selon l'une quelconque des revendications 7 à 11 dans laquelle l'arbre (74) du ou de chaque dispositif de positionnement (68) est fileté, et le dispositif de positionnement comprend en outre un écrou (88) prévu sur l'extrémité de l'arbre, et dans laquelle le dispositif de positionnement est configuré pour appliquer la force de serrage entre les première et seconde parties lorsque l'écrou est serré.

13. Pale d'éolienne selon la revendication 7, dans laquelle la première partie (66) est une coque de pale d'éolienne et la seconde partie (62) est une toile de cisaillement.

14. Pale d'éolienne selon la revendication 13, dans laquelle la toile de cisaillement (62) comprend une bride de montage (60) définissant la seconde surface de montage.

15. Éolienne comprenant la pale d'éolienne selon l'une quelconque des revendications 7 à 14.
